Europäisches Patentamt

European Patent Office

Office européen des brevets

(11) Publication number: **0 170 104 B1**

## EUROPEAN PATENT SPECIFICATION

(45) Date of publication of patent specification: **02.10.91**

(21) Application number: **85108368.3**

(22) Date of filing: **05.07.85**

(51) Int. Cl.$^5$: **C08K 3/06**, C08L 21/00,
C08J 3/22

(54) **Rubber dispersive agent for insoluble sulphur and process of preparing same.**

(30) Priority: **07.07.84 JP 142056/84**

(43) Date of publication of application:
**05.02.86 Bulletin 86/06**

(45) Publication of the grant of the patent:
**02.10.91 Bulletin 91/40**

(84) Designated Contracting States:
**DE FR GB IT**

(56) References cited:
**GB-A- 915 445**
**US-A- 3 012 985**
**US-A- 4 032 469**

(73) Proprietor: **SANSHIN KAGAKU KOGYO CO., LTD.**
**150, Oaza Yanai**
**Yanai-shi Yamaguchi-ken(JP)**

(72) Inventor: **Kifune, Tatsuo**
**198-5, Ohnokita Hirao-cho**
**Kumage-gun Yamaguchi-ken(JP)**
Inventor: **Ito, Takeharu**
**567-2, Oaza Hirao-mura Hirao-cho**
**Kumage-gun Yamaguchi-ken(JP)**

(74) Representative: **Eitle, Werner, Dipl.-Ing. et al**
**Hoffmann, Eitle & Partner Patentanwälte Arabellastrasse 4**
**W-8000 München 81(DE)**

## Description

The present invention relates to a dispersive agent for dispersing insoluble sulphur in rubber, the use of a coating oil for preparing such a dispersive agent, a method of preparing the dispersive agent, and a method of dispersing insoluble sulphur in rubber using such a dispersive agent.

In most cases, insoluble sulphur is preferred to normal sulphur as a vulcanizing agent for rubber. The insoluble rubber is used in particular for rubber products requiring an adhering step, transparent rubbers liable to scorching, colored rubbed products, and so on.

The term "insoluble rubber" used herein refers to polymerized sulphur which is insoluble in carbon disulfide. Although normal insoluble sulphur in its natural state contains approximately 10% of soluble sulphur, it is referred herein simply as insoluble sulphur.

Due to its polymerized structure, the insoluble sulphur should be dispersed uniformly in rubber when the sulphur is used.

Conventionally, insoluble sulphur is used in the form of fine grains which are liable to be atomised and lost as dust during use. Further, since the fine grains are extremely liable to be charged or electrified due to friction between the grains, powder dust explosions may be caused. Thus, the use of fine grain sulphur causes problems concerning workability, pollution and so on. Moreover, since the insoluble sulphur does not have good flow properties (fluidability), it suffers from poor workability in transportation and storage.

In order to prevent the insoluble sulphur from forming dust, and from being electrically charged, it has been proposed to add rubber processing oil to the sulphur. The proposed idea, however, is unsatisfactory since the insoluble sulphur and oil do not disperse well into rubber. In order to improve the physical properties of the sulphur, in particular the dispersion ability into rubber, various proposals have been made. None of these have met requirements sufficiently.

## Description of the Prior Art

For example, Japanese Unexamined Patent Publication No. 49-93294 discloses granules obtained by addition of oil consisting of processing oil and surfactant to insoluble sulphur with a view to improving the dispersion of the sulphur into rubber. U.S. Patent Specification No. 3 706 708 also suggests adding ethylene glycol ether, a non-ionic activator, to insoluble sulphur so as to accelerate the sulphur dispersion. Both of the proposals succeeded in somewhat improving the sulphur dispersion into rubber. But they are still unsatisfactory since the use of the activator is expensive and since the sulphur itself does not disperse to its full extent.

U.S. Patent No. 3 012 985 describes a process for pelleting sulphur in which a mixture of insoluble sulphur, rubber latex, a surfactant and a plasticizer in defined proportions together with sufficient water to form an extrusile paste is extruded to make a pressed pellet. In this process the insoluble sulphur is largely converted to soluble sulphur.

## Summary of the Invention

An object of the invention is to provide an improved rubber dispersive agent which eliminates the drawbacks of the prior art.

Another object of the invention is to provide an inexpensive rubber dispersive agent which does not adversely affect the physical properties of the vulcanized insoluble rubber, and which improves the sulphur dispersing property.

Still another object of the invention is to provide a rubber dispersive agent which improves the fluidability and stability of the insoluble sulphur itself.

A further object of the invention is to provide a novel process for producing an improved rubber dispersive agent.

In order to achieve the objects of the invention, there is provided, according to the invention, a rubber dispersive agent consisting of commercially available rubber-processing oil into which rubber of 0.1 ~ 30% by weight is dissolved and is used such that said oil-rubber composition of 0.5 ~ 30% by weight of total amount, is added to insoluble sulphur.

The rubber dispersive agent of the invention is prepared, according to the invention, by mixing sulphur with a composition consisting of rubber and rubber processing oil, in the presence or absence of organic solvent, and by removing organic solvent if necessary. As organic solvents for use in the present invention may be considered to be carbon disulfides or aromatic hydrocarbons. Rubber may be mixed with insoluble sulphur in the state in which the rubber is dissolved in rubber processing oil and/or organic solvent, so that

2

they may be homogeneous. In the mixing step, further additives may be mixed subsequently although additional time is required for homogenization in the event that additives are mixed.

The insoluble sulphur is dispersed in the rubber for vulcanization by mixing rubber with rubber processing oil to obtain a coating oil, adding the coating oil thus prepared to insoluble sulphur to form a vulcanizing agent, adding the vulcanizing agent to rubber for vulcanization and mixing to disperse the sulphur therein.

Rubber processing oil and rubber to be used are both used in the rubber processing field normally and cause no deleterious effect on the physical property of thus vulcanized rubber. It is surprising and is unexpected that the rubber dispersive property is improved by treating the insoluble sulphur only with rubber processing oil and rubber in the presence or absence of organic solvent, and that the physical property, particularly the fluidability and stability of the insoluble sulphur itself is improved. The advantage of the present invention resides in this point.

Technical Function

The complete principle of the technical function of the rubber dispersive agent according to the invention has not yet been clarified. But it is thought that the composition of rubber processing oil and of rubber forms an oil affinity micelle with insoluble sulphur, which contributes to improve the physical property, such as fluidability and stability of the insoluble sulphur itself. Further, the product obtained by the use of the agent prepared in accordance with the process of the invention is less adhesive at the time when it is weighed and transported than commercially available insoluble sulphur, and is less secondary-agglomerated and consequently it is less liable to hardening. Accordingly the product obtained is excellent in fluidability and in storage-stability. This is also because the oil affinity micelle is formed at the surface of the insoluble sulphur, which decreases friction and reduces static electricity.

As will be clear from examples below, it is essential that the surface of the insoluble sulphur is previously treated with oil and rubber. No particular effect, such as improvement or dispersing property is obtained even if the sulphur is added to with the rubber processing oil and rubber at the time of vulcanization.

Preferred Embodiment - Process for Preparing Coating oils

Rubber is added to rubber processing oil such as naphtenes, paraffins, aromatics, in an amount of 0.1 - 30% by weight of the total under stirring. After the mixture is heated to about 80° C as required with stirring until the rubber is completely dissolved, it is cooled to ordinary temperature to obtain coating oil composition. In the case where organic solvent is used in place of the processing oil, the resulted composition is referred to herein as coating solvent composition.

Table 1 below shows examples of coating oil compositions.

Table 1

| No. | Rubber | Oil amount (g) | Rubber Amount (g) | Oil Used |
|-----|--------|----------------|-------------------|----------|
| 1. | Natural rubber | 999 | 1 | Naphthenes |
| 2. | Styrene butadiene rubber | 995 | 5 | Aromatics |
| 3. | Butadiene rubber | 800 | 200 | Naphthenes |
| 4. | Isoprene rubber | 970 | 30 | Naphthenes |
| 5. | Isobutylene isoprene rubber | 900 | 100 | Paraffins |
| 6. | Nitrile butadiene | 800 | 200 | Aromatics |
| 7. | Ethylene propylene | 700 | 300 | Paraffins |
| 8. | Ethylene propylene diene rubber | 700 | 300 | Paraffins |

Example of the preparation of rubber dispersive agents (dispersion media) are given in the following:

Example 1

995 g of powdered insoluble sulphur (96% purity) was introduced into a stainless ribbon blender of 2ℓ volume and was stirred. Then 5 g of the coating oil composition of the type No. 1 in table 1 was dropped into the sulphur. The mixture was stirred for 60 minutes after the composition was dropped so that the

3

sulphur may be coated by the composition and obtained 999.8 g insoluble sulphur composition having 99.5% total sulphur content and 95.5% of insoluble sulphur content.

Example 2

900 g of powdered insoluble sulphur (97% purity) and 100 g of No. 2 (Table 1) coating oil composition were mixed in a way similar to example 1 and obtained 997 g of insoluble sulphur composition having 90% of total sulphur content and 86.4% of insoluble sulphur content.

Example 3

850 g of powdered insoluble sulphur (97% purity) and 150 g No. 3 coating oil composition were used as Example 1. 994 g of insoluble sulphur composition was obtained which has sulphur 85% and insoluble sulphur 81.6%.

Example 4

800 g of powdered insoluble sulphur (98% purity) and 200 g of No. 4 coating oil composition were processed as Example 1. 995 g of insoluble sulphur composition containing sulphur 80% and insoluble sulphur 76.8%, was obtained.

Example 5

750 g of powdered insoluble sulphur (98% purity) and 250 g of No. 6 oil composition were used in a way similar to Example 1 and obtained 986 g of insoluble sulphur composition containing sulphur 75% with insoluble sulphur 72%.

Example 6

700 g of powdered insoluble sulphur (97% purity) and 300 g of No. 8 oil composition were processed as Example 1 to result 993 g of insoluble sulphur composition containing sulphur 70% and insoluble sulphur 67.9%.

Example 7

850 g of powdered insoluble sulphur (97% purity) was stirred in a mixed liquid of 150 g of No. 7 coating oil composition and 200 g of carbon disulfide, in a manner similar to Example 1. After organic solvent is removed, 984 g of insoluble sulphur composition containing 83% of insoluble sulphur was obtained.

Example 8

900 g of powdered insoluble sulphur (98% purity) was stirred in a mixture of 100 g coating solvent composition consisting of 5 wt.% styrene butadiene rubber and 95 wt.% toluene, and 95 g aromatic processing oil, in a manner as Example 1. After organic solvent was removed, 998.7 g of insoluble sulphur composition containing insoluble sulphur 87.5%, was obtained.

Example 9

960 g of wet-cake like insoluble sulphur containing 22% of carbon disulfide being in midway to normal insoluble sulphur, was introduced into a ribbon blender and stirred. 360 g of coating solvent composition containing ethylene propylene rubber 14.3 wt.% and carbon disulfide 85.7 wt.% was dropped onto the sulphur, stirred and homogenized. Further, 200 g of paraffin processing oil is introduced, mixed and homogenized so that the sulphur may be coated. After carbon disulfide is removed, 990 g of insoluble sulphur composition containing 74% of insoluble sulphur was obtained.

Example 10

1090 g of wet-cake like insoluble sulphur stated in Example 9, 180 g of coating solvent composition

4

containing isobutylene isoprene rubber 11.1 wt.% and carbon disulfide 88.9 wt.%, and 130 g of paraffin processing oil were used in a manner similar to Example 9. After carbon disulfide is removed, 970 g of insoluble sulphur containing 83.2% insoluble sulphur was obtained.

Example 11

1200 g of wet-cake like insoluble sulphur as described in Example 9 was introduced into a ribbon blender. While being stirred, the sulphur was added to with 70 g of coating oil composition containing naphthene oil 95wt.% and natural rubber 5 wt.% After the mixture is homogenized and carbon disulfide is removed, 1001 g of insoluble sulphur composition containing insoluble sulphur 92%, was obtained.

Example 12

1100 g of wet-cake like insoluble sulphur as described in Example 9 was introduced into a ribbon blender. While being stirred, to the sulphur was added to with 150 g of coating oil composition containing naphthene oil 80 wt.% and natural rubber 20 wt.%, and 300 g of xylene, simultaneously. After mixed homogenized and carbon disulfide was removed, 1003 g of insoluble sulphur composition containing insoluble sulphur 85.1% was obtained.
The following controls were also carried out:

Control 1

800 g of powdered insoluble sulphur and 200 g of naphthene oil were treated as stated in Example 1, 990 g of insoluble sulphur coated by oil only was obtained.

Control 2

1100 g of wet-cake like insoluble sulphur as described in Example 9, 150 g of aromatic oil and 300 g of toluene were simultaneously introduced into a ribbon blender and mixed. After organic solvent was removed, 1002 g of insoluble sulphur coated by oil only was obtained.

Control 3

100 g of commercially available polybutadiene rubber was wound around a roll maintained at 50 ± 5 C. 4 g of insoluble sulphur and 1 g of naphthene oil were slowly added thereto for 1 minute, cut for 2 minutes, and tightly milled five times to produce sheet.

Results of Rubber Dispersion

100 c of commercially available polybutadiene rubber was wound around a roll maintained at 50 ± 5 C. 5 g of insoluble sulphur prepared as described in Controls 1 and 2, was slowly added for 1 minute, cut for 2 minutes, and tightly milled five times to obtain sheet. Similar tests were carried out with the results of Example 1 to 12. The numbers of dispersed inferior particles were counted. Results are shown in Table 2.

EP 0 170 104 B1

Table 2

| Example or Control No. | No. of inferiorly dispersed particle per 1 $cm^2$ |
|---|---|
| Example 1 | 3 |
| Example 2 | 0 - 1 |
| Example 3 | None |
| Example 4 | None |
| Example 5 | 1 - 2 |
| Example 6 | 2 |
| Example 7 | 0 - 1 |
| Example 8 | 0 - 1 |
| Example 9 | 0 - 1 |
| Example 10 | None |
| Example 11 | 1 - 2 |
| Example 12 | 3 |
| Control 1 | 5 - 7 |
| Control 2 | 6 - 8 |
| Control 3 | Many |

From the results shown in table 2, it is clear that the rubber dispersing agent prepared in accordance with the invention remarkably improves dispersion of insoluble sulphur into rubber.

Although the foregoing invention has been described in some detail by way of examples for purposes of clarity of understanding, it will be obvious that certain changes and modifications may be practiced within the scope of the appended claims.

**Claims**

1. An agent for facilitating the dispersal of insoluble sulphur in rubber comprising a mixture of:
   insoluble sulphur, and
   0.5-30% by total weight of a coating oil,
   said coating oil being prepared by dissolving rubber in rubber processing oil such that the coating oil contains the rubber in an amount of 0.1-30% by weight based upon the rubber and rubber processing oil.

2. An agent for facilitating the dispersal of insoluble sulphur in rubber comprising a mixture of:
   insoluble sulphur, and
   0.5-30% by total weight of a coating oil,
   said agent being prepared by dissolving rubber in an organic solvent to form a coating solvent composition, adding insoluble sulphur and a rubber processing oil to the coating solvent composition, and removing the organic solvent to form a mixture of the coating oil and the insoluble sulphur, the coating oil containing the rubber in an amount of 0.1-30% by weight based upon the rubber and the rubber processing oil.

3. An agent according to claim 1 or claim 2, wherein said rubber is natural and/or synthetic rubber.

4. An agent according to claim 1 or claim 2, wherein said rubber is synthetic and/or polybutadiene rubber.

5. An agent according to any preceding claim, wherein said rubber process oil is at least one of a naphthene, a paraffin, and an aromatic.

6. The use of a coating oil comprising a rubber processing oil having dissolved therein 0.1-30% by weight of rubber based upon the total weight of rubber and rubber processing oil for preparing an agent according to any of claims 1-5.

7. A process for preparing an agent according to any of claims 1-5, comprising the step of mixing insoluble sulphur, rubber and rubber processing oil.

6

8. A process according to claim 7 wherein the mixing is carried out in the presence of an organic solvent.

9. A process according to claim 8 wherein the mixing is effected after the rubber has been dissolved in the organic solvent.

10. A process according to claim 8, wherein the mixing is effected after the organic solvent and rubber processing oil have been mixed.

11. A process according to any of claims 8-10, wherein the organic solvent is carbon disulfide and/or an aromatic hydrocarbon.

12. A method of dispersing insoluble sulphur in rubber for vulcanisation comprising the steps of:
    mixing rubber processing oil with 0.1-30 wt% rubber to form a coating oil,
    mixing the insoluble sulphur with 0.5-30 wt% of the coating oil to form a dispersive agent, and
    mixing the dispersive agent with rubber to disperse the sulphur therein.

## Revendications

1. Agent pour faciliter la dispersion de soufre insoluble dans du caoutchouc, comprenant un mélange :
   - de soufre insoluble, et
   - de 0,5 à 30 % en poids total d'une huile de revêtement,
   ladite huile de revêtement étant préparée en dissolvant du caoutchouc dans une huile de traitement du caoutchouc de façon que l'huile de revêtement contienne le caoutchouc dans une quantité de 0,1 - 30 % en poids par rapport au caoutchouc et à l'huile de traitement du caoutchouc.

2. Agent pour faciliter la dispersion de soufre insoluble dans du caoutchouc, comprenant un mélange :
   - de soufre insoluble, et
   - de 0,5 à 30 % en poids total d'une huile de revêtement,
   ledit agent étant préparé en dissolvant du caoutchouc dans un solvant organique de manière à former une composition de solvant de revêtement, en ajoutant du soufre insoluble et une huile de traitement du caoutchouc à la composition de solvant de revêtement, et en éliminant le solvant organique pour former un mélange de l'huile de revêtement et du soufre insoluble, l'huile de revêtement contenant le caoutchouc dans une quantité de 0,1 - 30 % en poids par rapport au caoutchouc et à l'huile de traitement du caoutchouc.

3. Agent selon la revendication 1 ou la revendication 2, dans lequel ledit caoutchouc est du caoutchouc naturel et/ou du caoutchouc synthétique.

4. Agent selon la revendication 1 ou la revendication 2, dans lequel ledit caoutchouc est du caoutchouc synthétique et/ou du caoutchouc polybutadiène.

5. Agent selon l'une quelconque des revendications précédentes, dans lequel ladite huile de traitement du caoutchouc est au moins un parmi un naphtène, une paraffine et un aromatique.

6. Utilisation d'une huile de revêtement comprenant une huile de traitement du caoutchouc dans laquelle sont dissous de 0,1 à 30 % en poids de caoutchouc par rapport au poids total du caoutchouc et de l'huile de traitement du caoutchouc afin de préparer un agent selon l'une quelconque des revendications 1 à 5.

7. Procédé pour préparer un agent selon l'une quelconque des revendications 1 à 5, comprenant l'étape consistant à mélanger du soufre insoluble, du caoutchouc et une huile de traitement du caoutchouc.

8. Procédé selon la revendication 7, dans lequel le mélange est exécuté en présence d'un solvant organique.

9. Procédé selon la revendication 8, dans lequel le mélange est effectué après dissolution du caoutchouc dans le solvant organique.

**10.** Procédé selon la revendication 8, dans lequel le mélange est effectué après mélange du solvant organique et de l'huile de traitement du caoutchouc.

**11.** Procédé selon l'une quelconque des revendications 8 à 10, dans lequel le solvant organique est du disulfure de carbone et/ou un hydrocarbure aromatique.

**12.** Procédé pour disperser du soufre insoluble dans du caoutchouc pour vulcanisation, comprenant les étapes consistant à :
- mélanger une huile de traitement du caoutchouc avec 0,1-30 % en poids de caoutchouc pour former une huile de revêtement,
- mélanger le soufre insoluble avec 0,5-30 % en poids de l'huile de revêtement afin de former un agent dispersant, et
- mélanger l'agent dispersant avec du caoutchouc afin d'y disperser le soufre.

**Patentansprüche**

**1.** Mittel zum Dispergieren von unlöslichem Schwefel in Kautschuk, umfassend eine Mischung aus:

unlöslichem Schwefel und

0,5 bis 30 %, bezogen auf das Gesamtgewicht, eines Überzugsöls, wobei das Überzugsöl hergestellt wird, indem Kautschuk in Kautschukverarbeitungsöl so gelöst wird, dass das Überzugsöl den Kautschuk in einer Menge von 0,1 bis 30 Gew.%, bezogen auf den Kautschuk und das Kautschukverarbeitungsöl enthält.

**2.** Mittel zum Dispergieren von unlöslichem Schwefel in Kautschuk, umfassend eine Mischung aus

unlöslichem Schwefel und

0,5 bis 30 %, bezogen auf das Gesamtgewicht, eines Überzugsöls, wobei das Mittel hergestellt wird, indem Kautschuk in einem organischen Lösungsmittel gelöst wird, wobei eine Überzugslösungsmittel-Zusammensetzung gebildet wird, unlöslicher Schwefel und ein Kautschukverarbeitungsöl zu der Überzugslösungsmittel-Zusammensetzung hinzugefügt werden, und das organische Lösungsmittel unter Ausbildung einer Mischung aus Überzugsöl und unlöslichem Schwefel entfernt wird, wobei das Überzugsöl den Kautschuk in einer Menge von 0,1 bis 30 Gew.%, bezogen auf den Kautschuk und das Kautschukverarbeitungsöl, enthält.

**3.** Mittel nach Anspruch 1 oder Anspruch 2, bei dem der Kautschuk natürlicher und/oder synthetischer Kautschuk ist.

**4.** Mittel nach Anspruch 1 oder Anspruch 2, bei dem der Kautschuk synthetischer und/oder Polybutadienkautschuk ist.

**5.** Mittel nach einem der vorangegangenen Ansprüche, bei dem das Kautschukverarbeitungsöl mindestens eines aus der Gruppe aus Naphthen, paraffin und einem Aromaten ist.

**6.** Verwendung eines Überzugsöls, umfassend ein Kautschukverarbeitungsöl, in dem 0,1 bis 30 Gew.%, bezogen auf das Gesamtgewicht von Kautschuk und Kautschukverarbeitungsöl, gelöst sind, zum Herstellen eines Mittels nach einem der Ansprüche 1 bis 5.

**7.** Verfahren zum Herstellen eines Mittels nach einem der Ansprüche 1 bis 5, das den Schritt umfasst: Mischen von unlöslichem Schwefel, Kautschuk und Kautschukverarbeitungsöl.

**8.** Verfahren nach Anspruch 7, bei dem das Mischen in Anwesenheit eines organischen Lösungsmittels durchgeführt wird.

**9.** Verfahren nach Anspruch 8, bei dem das Mischen bewirkt wird, nachdem der Kautschuk in dem organischen Lösungsmittel gelöst worden ist.

**10.** Verfahren nach Anspruch 8, bei dem das Mischen bewirkt wird, nachdem das organische Lösungsmittel und das Kautschukverarbeitungsöl gemischt worden sind.

**11.** Verfahren nach einem der Ansprüche 8 bis 10, bei dem das organische Lösungsmittel Schwefelkohlenstoff und/oder ein aromatischer Kohlenwasserstoff ist.

**12.** Verfahren zum Dispergieren von unlöslichem Schwefel in Kautschuk für die Vulkanisation, das die Schritte umfasst:

Mischen von Kautschukverarbeitungsöl mit 0,1 bis 30 Gew.% Kautschuk unter Ausbildung eines Überzugsöls;

Mischen des unlöslichen Schwefels mit 0,5 bis 30 Gew.% Überzugsöl unter Ausbildung eines Dispersionsmittels; und

Mischen des Dispersionsmittels mit Kautschuk, wodurch der Schwefel darin dispergiert wird.